# EUROPEAN PATENT APPLICATION

(11) **EP 4 807 610 A1**
(43) Date of publication of application: **16.09.2026**
(21) Application number: 25163494.5
(22) Date of filing: 13.03.2025
(51) Int. Cl.: G06F 30/20, B22F 10/28, B33Y 50/00, G06F 30/23, G06F 111/06, G06F 113/10, G06F 119/06, G06F 119/08, G06F 119/18, G06F 119/14

(54) **METHOD OF DESIGNING A TPMS-BASED LATTICE SUPPORT STRUCTURE FOR POWDER BED ADDITIVE MANUFACTURING AND RELATED SUPPORT STRUCTURE**

(71) Applicant: Siemens Energy Global GmbH & Co. KG, 81739 München (DE)
(72) Inventor: VOLLMER, Matthias, 59846 Sundern (DE); HEITMANN, Timo, 10245 Berlin (DE)

(57) **Abstract**

A method of designing a support structure (1) for powder bed fusion additive manufacturing is presented, the support structure (1) comprising a triply periodic minimal surface (TPMS), wherein the method makes use of a lattice optimization algorithm (LO), with a lattice cell size (1) as an optimization variable, wherein an absolute lattice feature size (t) is chosen as a design constant, and a relative lattice feature size (t') is taken as a model function depending on a lattice volume fraction (*ξ*), the method further comprising adjusting a lattice volume fraction (*ξ*) within the optimization routine. Moreover, a support structure manufactured by a related additive manufacturing method and a related computer program are provided.

## Description

The present invention relates to a method of designing a support structure for (laser) powder bed fusion additive manufacturing. The method may particularly relate to a Computer-Aided-Engineering (CAE) approach for the build process preparation of a component which needs to be additively manufactured with the help of the support structure.

Preferably, the component denotes a component of a turbo machine, e.g., applied in the flow path hardware of a gas turbine. The component is, thus, preferably made of a nickel- or cobalt-based superalloy, particularly a precipitation hardened alloy.

In the alternative, the component may pertain to a high-performance component, such as a component applied in power generation, in the aviation, or the automotive industry.

Additive manufacturing (AM) or 3D-printing techniques comprise e.g., powder-bed-fusion methods, such as selective laser melting (SLM) or laser powder bed fusion (LPBF), selective laser sintering (SLS) and electron beam melting (EBM).

AM, particularly powder-bed methods have proven to be useful and advantageous in the fabrication of prototypes or complex components, such as components with filigree structure or functionally cooled components. Further, the additive manufacture stands out for its short chain of process steps which in turn enables material economization and a particularly low lead time.

Related machine hardware or setups for such methods usually comprise a manufacturing or build platform on which the component is built layer-by-layer after the feeding of a layer of base material which may then be melted, e.g. by an energy beam, such as a laser, and subsequently solidified. The layer thickness is determined by a recoater that automatically moves over the powder bed and removes excess material from a manufacturing plane or build space. Typical layer thicknesses amount to between 20 µm and 40 µm. During the manufacture, said energy beam scans over the surface and melts the powder on selected areas which may be predetermined by a CAD-file according to the geometry of the component to be manufactured. Said scanning or irradiation is preferably carried out in a computer-assisted way, such as Computer-Aided-Manufacturing (CAM) instructions.

As is known in the related art, such support structures are needed in additive manufacturing to obtain a rigid, heat conductive build setup and to support overhang regions of the part or component. The mechanical stiffness is e.g., needed to reduce deflections in vertical z-direction which may in turn result in recoater crashes and therefore ensure a continuous build process. A certain heat conductivity is required to dissipate the heat input of the energy source, like a laser or electron beam. A higher conductivity reduces thermal hot spots, which generally leads to higher quality parts, such as in terms of surface roughness and dimensional accuracy. As a drawback, however, support structures themselves increase the building time and consume additional resources, e.g., powder and process time. Therefore, low mass support structures are desired in general.

Support structures are usually designed by experienced engineers based on their engineering knowledge or via CAE. A well-known CAE method is topology optimization (TO), computing the ideal distribution of voids and solid material within a prescribed design domain.

Recent developments utilize density-based TO routines to obtain density-variable lattice structures that further reduce the material effort. The lattice density influences the elasticity and the conductivity proportionally and is adjusted by modifying the lattice feature size, e.g., the wall thickness of a gyroid. The resulting support structure often requires time consuming (hatching) scan-strategies but also proves the potential of density variable support structures.

It is an object of the present invention to provide means that help to solve the above-mentioned evident technical problems. Particularly, a superior approach for providing a design of support structure is provided with which a far improved support strategy in (industrialized) additive manufacturing is enabled.

The mentioned object is achieved by the subject-matters of the independent claims. Advantageous embodiments are subject-matter of the dependent claims.

An aspect of the present invention relates to a method of designing a support structure for (laser) powder bed fusion additive manufacturing. The support structure is to be designed or shall comprise a triply periodic minimal surface (TPMS), such as a gyroid or a similar embedded or minimal surface. Also, the method makes use or utilizes a lattice optimization algorithm with a lattice (unit) cell size defined as an optimization variable for the related model.

The method further comprises a measure that an absolute lattice feature size is chosen or prescribed as a design or process constant, and a relative lattice feature size is taken as a model function depending on a lattice volume fraction. Said lattice volume fraction is expediently a dimensionless value between 0 and 1 as will be described by way of the specific embodiments further below. A lattice volume fraction of almost "1" would apparently relate to a lattice cell filled almost fully with (lattice) material, while a volume fraction being close to "0" would constitute a very filigree and thin lattice structure with a lot of pores and interspaces.

The method further comprises adjusting or determining a lattice volume fraction within the mentioned optimization routine or algorithm. Thereby, also the parameter of the lattice unit cell size may be obtained. The lattice volume fraction might e.g., be adjusted together with the lattice cell size.

As an advantage, by using a gyroid lattice with a constant thickness, single-scan irradiation strategies are enabled when a sufficiently small wall thickness or feature size is defined. As a particular advantage, single-scan strategies render time consuming hatching irradiation steps obsolete. Additionally, a "size effect" can be exploited, since the gyroid's absolute surface area increases for smaller cell sizes with the same solid volume. With an increased surface area in combination with the reduced distance between two solid regions that are separated by powder, the effective thermal insulation of the powder is reduced. This, in turn, strongly facilitates heat dissipation by the support during the AM process. Consequently, risk of hotspots or thermally induced structural defects is advantageously reduced as well.

As a further advantage, the whole laser powder bed fusion or electron beam melting fusion can be accelerated significantly, as irradiation time can be spared while exploiting further technical merits of the improved support structure.

Particularly the claimed feature that the absolute lattice feature size or wall thickness of the TPMS structure is defined as a constant, characterizes the presented method as innovative and as a differentiation over known approaches of the prior art.

In an embodiment the support structure comprises or constitutes a gyroid structure, expediently comprising a gyroid surface. The example of this type of TPMS structure allows to expediently exploit the specific advantages of the gyroid, i.e., it's minimized surface, it's stability and embeddedness, for instance. In the alternative the specific design chosen for the support structure may be any other TPMS-based (hollow) lattice that can be adapted in terms of its volume fraction.

In an embodiment the lattice feature size is preferably a wall thickness or thickness of the TPMS structure. The wall thickness is preferably chosen small enough to qualify for a single-scan irradiation strategy during the powder bed fusion process. To this effect, the wall thickness is preferably chosen to be less than 100 µm, such as 90 µm or less, like 80 µm for instance.

The presented method is or is preferably part of a CAE method, wherein the optimization algorithm or routine is a so-called density-based topology optimization (TO) of the support structure the related mechanical and/or thermal loads thereof might result from a finite element (FE) simulation of the AM process.

Topology optimization is a proven example of a CAE method, e.g., computing the ideal distribution of voids and solid material within a prescribed design domain. Topology optimization approaches might as well have an iterative nature in such a way that the result might be adapted or modified afterwards until the best results are generated.

In general, topology optimization approaches may consider elastic or mechanical and/or thermal loads and their related coupling effects. The newly introduced volume fraction might as well be considered in or for the solid domain. Hence, the topology optimization algorithm response does possibly not only contain information about voids and solid regions but also about the lattice densities of the related support structure. This more detailed result advantageously allows to reduce mass or economize material of the support structure.

The introduced optimization routine or algorithm preferably computes an ideal lattice cell size field being thereby constrained by thermal and mechanical boundary conditions for the powder bed fusion process. Said boundary conditions may be set by a maximum temperature, the deflection of the components structure in the vertical z-direction or the like. Also, specification of a mass of the support structure may form part of a related boundary condition.

According to an embodiment, the lattice volume fraction is determined or adjusted between the values 0.2 and 0.8. These values have particularly proven to be expedient for the convergence of the model and the efficiency of the designing process.

On the other hand, enabling similar advantages, the lattice cell size may be predefined or optimized in the range of preferably between 0.2 mm and 1 mm. More particularly, this range of 0.2 mm to 1 mm is a result of the chosen absolute wall thickness of preferably below 100 µm and according to the lattice volume fraction bounds (like between 0.2 and 0.8 as described herein).

A further aspect of the present invention relates to a method of additively manufacturing a support structure which is designed or provided by the described method via a powder bed fusion process, wherein the TPMS structure is established by a single-scan irradiation. It is e.g., known to a person skilled in the art that a single scan irradiation is difficult to achieve and requires accurate control over a plurality of process parameters. Often, single scans for the establishment of structural thicknesses below 100 µm require a dedicated pulsed irradiation strategy with which a tailor-made and preferably low energy input into the powder is achieved. Pulsed irradiation, on the other hand, implies to establish continuous melt pools which are also required for the structure and for establishing a rigid lattice.

The additive manufacturing method may imply a related build process simulation or certain steps of CAM, with which a dedicated scan strategy is determined for the later 3D printing or thermal irradiation process.

A further aspect of the present invention relates to a support structure manufactured or provided by the additive manufacturing method. The support structure expediently comprises a triply periodic minimal surface, particularly a gyroid surface or structure, wherein a wall thickness is less than 100 µm, such as 90 µm or the like.

A further aspect of the present invention relates to a computer program (product) like in the format of a numerical code (NC). The computer program (product) comprises instructions which when the program is executed by a computer, a processor and/or data processing device, cause said device to carry out the steps of the designing method as described above.

Still further, an aspect of the invention relates to a computer readable storage medium having stored there on the computer program as described. The computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet for example, or further systems.

The above-mentioned computer, data processing device, or processor may be a microprocessor and/or a microcontroller and/or a FPGA (Field Programmable Gate Array) and/or a DSP (Digital Signal Processor).

The invention also relates to realizations comprising a combination of the features of several of the described embodiments.

Advantages and embodiments relating to the described method of designing or and/or the described additive manufacturing method are valid or pertain likewise to the support structure and/or the computer program as described.

Further, features and advantageous embodiments become apparent from the following description of the exemplary embodiment in connection with the Figures.
Figure 1 shows a simplified flowchart indicating inventive method steps in the context of the design and preparation phase of powder bed fusion additive manufacturing processes.
Figure 2 indicates the course of the parameter of a lattice volume fraction as a function of the so-called relative lattice cell size.
Figure 3 indicates a scaling factor for the mechanical properties of an elasticity and a thermal conductivity as a function of the relative lattice cell size.
Figures 4 and 5 each indicate a tabular overview of features of the inventive support structure or its related lattice parameters (cf. bottom row, respectively) as compared to a conventional support lattice design (cf. top row).
Figure 6 finally shows a conventional support structure, supporting the component during the additive built up by a powder bed fusion method.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

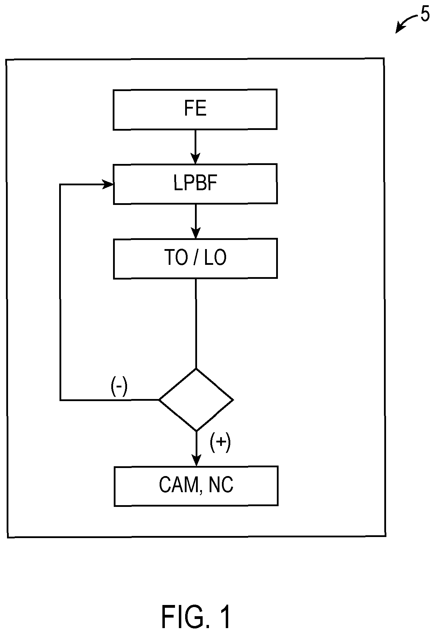

Figure 1 shows flow chart indicating inventive method steps in the context of the preparation and/or support structure designed for powder bed fusion additive manufacturing.

The inventive method is a method of designing a support structure 1 for powder bed fusion additive manufacturing. The support structure as such is not shown in Figure 1.

The support structure 1 comprises a so-called triply periodic minimal surface (TPMS), like a gyroid surface or structure.

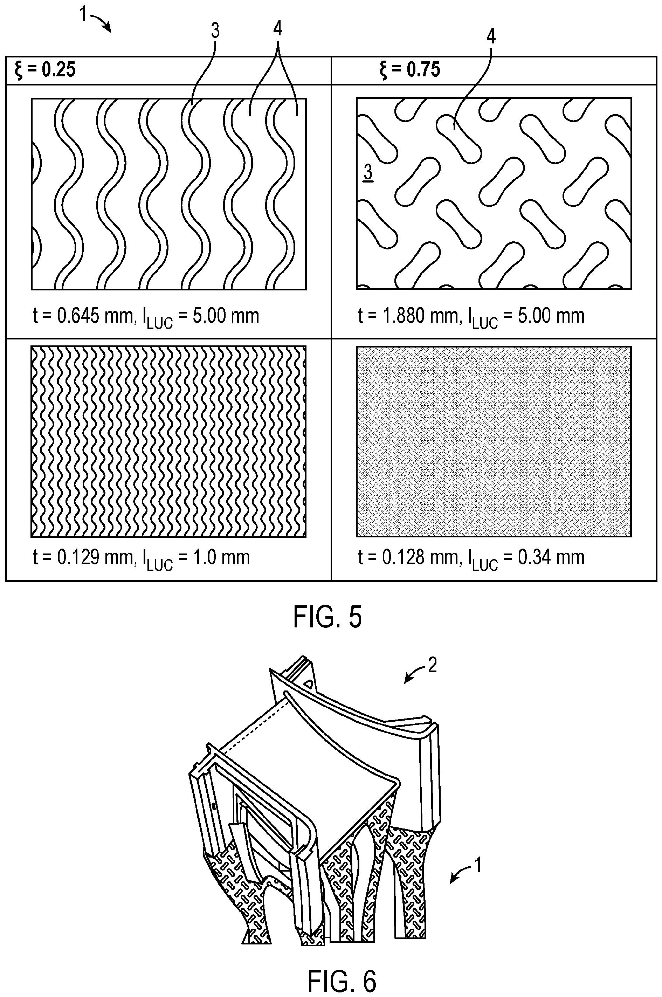

It is particularly shown in Figure 6 that the support structure 1 is shown below and effectively supporting the component to be manufactured afterwards, thereby facilitating a related thermal dissipation and mechanical support of the component 2 during the LPBF process.

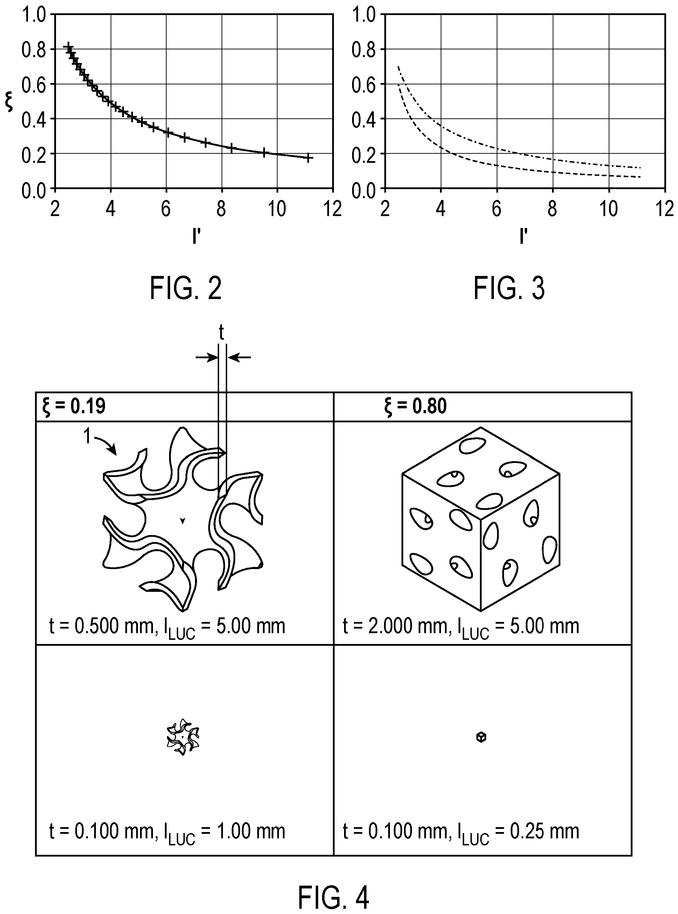

The method makes use of a topology optimization (TO) and/or lattice optimization (LO) algorithm, with a lattice cell size l as an optimization variable (cf. Figures 3 and 4 and the related description). Related thermal and/or mechanical loads or boundary conditions of or for the topology and/or lattice optimization might result from a finite element FE simulation of the printing process.

Once the topology and/or lattice optimization is performed, there may be a condition or requirement integrated in the loop, like when e.g. a substandard optimization result is obtained which is below a certain quality requirements, a new preparation of the LPBF process is carried out with a further topology optimization loop (cf. arrow on the left in Figure 1).

If, on the contrary, the optimization result is satisfying, the computer aided manufacturing or build preparation process might be started along with the physical manufacturing of the related component 2 which is supported by the inventive support structure. To this effect, a result of the optimization and/or the designing of the support structure 1 can be or be part of a computer program or computer program product, like a numerical code NC for controlling the 3D printer or additive manufacturing machine (not explicitly indicated).

As will be described below in greater detail, according to the method, an absolute lattice feature size t is chosen as a design constant, that is held constant or at least in a certain range, like e.g., below a feature size which can be achieved with single scans or a wall thickness size of around 100 µm. Further, a relative lattice feature size t' is taken as a model function depending on a lattice volume fraction *ξ* (cf. also Figures 4 and 5 and its description).

The method further comprises adjusting the lattice volume fraction *ξ* within the optimization algorithm.

Figure 2 shows an exemplary course of said lattice volume fraction plotted for values between 0.8 and 0.2 as a function of a relative lattice cell size defined as the absolute lattice (unit) cell size divided by the feature size **(*l'*** = ***l*** / ***t***) as a relative lattice parameter. The crosses shall indicate actual or measured data points which are fitted with the inverse of a third order polynomial fit, for instance. Hence, it is evident that for low numbers of the relative lattice cell size l', lattice volume fraction is quite high whereas it decreases with an increase of the relative lattice cell size l'.

Figure 3 has the same horizontal axis parameter and value range as the diagram shown in Figure 2. However, instead of the lattice volume fraction, the scaling of mechanical properties, particularly those of a mechanical elasticity E(l') (cf. lower plot) and those of a thermal conductivity k(l') (cf. upper plot) are indicated, respectively. Both mechanical parameters depend on the relative lattice cell size l'. The general course is basically similar to the lattice volume fraction as shown in Figure 2, meaning that mechanical elasticity as well as thermal conductivity increase with reduced lattices cell size, or as the case may be decrease, when the cell size is increased (cf. above-mentioned "size effect"). Actually, only the mechanical properties scale for the variable lattice cell size, while the improved heat conduction comes automatically or in addition.

Figure 4 shows a table indicating size relations of exemplary single gyroid cell structures true to scale. In the upper row a conventional approach with related conventional parameters is shown, while the bottom row outlines an inventive gyroid design. In the left column, a lattice volume fraction of *ξ* = 0.19 is set, while said volume fraction is set to *ξ* = 0.80 on the right, respectively.

The conventional approach requires that said lattice volume fraction *ξ* and the lattice cell size l are determined as input parameters or process constants while the lattice feature size or wall thickness t of the TPMS structure remains variable. This approach bears significant disadvantages as it requires a cumbersome hatching irradiation and results in oversized lattice unit cells and is, hence, incompatible with a single-scan irradiation approach.

Only the inventive approach enables single-scan strategies which bring about the improved heat conductivity at an acceptable printing effort (irradiation time) of the support structure 1. Accordingly, the lattice size l is defined to be 5 mm for both lattice volume fractions, resulting in different feature sizes or wall thicknesses t, i.e., 0.5 mm on the left and 2 mm on the right.

On the contrary, as is shown in the bottom row in Figure 4, the inventive approach allows to set the wall thickness to those achievable with single scans or less, such as only 90 µm or less (not explicitly indicated in the Figures). This results - at the given values for the lattice volume fraction - in a unit cell size of 1 mm on the left and 0.25 mm on the right.

As will be further outlined by way of the description of Figure 5, the inventive approach particularly allows to implement much smaller lattice cell sizes l and therewith to exploit the above-mentioned size effect to the benefit of an increased thermal conductivity and heat dissipation through the achieved (gyroid) support.

Figure 5 shows - similarly to the situation and the parameters shown in Figure 4 - exemplary layer sections of solid support regions 3 and also related regions of loose (and solidified) powder 4 in its interspaces. Again, size relations are depicted true to scale as is the case in Figure 4.

The parameter ranges are as well similar (though not identical) to the situation as shown in Figure 4 (please refer to the values directly indicated in Figure 5 close to the table elements). Again, it is evident that the resolution of lattices can be significantly increased and related single scan strategies employed accordingly with the inventive concept requiring a constant feature size of wall thickness of the TPMS structure 1.

In other words, aspects of the presented concept can be described in that an alternative route for the density-based optimization of support structures is presented which uses a combination of topology optimization and lattice optimization. Here, the optimization variable is the lattice cell size l = t / t' (*ξ*) which depends on the constant lattice feature size t and the relative lattice feature size ***t'*** being an explicit function and unique for every lattice type.

For a constant ***t*** the lattices volume fraction *ξ* is adjusted by the related cell size, that subsequently influences the mechanical properties of the lattice.

The optimization routine may compute an ideal lattice cell size field l(x) and is constrained by thermal and mechanical manufacturing constraints for the LPBF process (like the maximum temperature, z-deflection etc.), while minimizing the mass. Preferably, however, the routine minimizes mechanical compliance with a volume reduction constraint.

Then, the routine could compute results that provide the required mechanical properties in a mass-efficient manner; reasonable for *ξ* are values like 0.2 ≤ *ξ* ≤ 0.8 in this context.

By using a gyroid lattice with a constant ***t*,** a single-scan strategy becomes available when a sufficiently small ***t*** is defined. Single-scan strategies render time consuming hatching obsolete and open a fully new design space. Additionally, the size-effect can advantageously be exploited, since the gyroids absolute surface area increases for smaller cell sizes with the same solid volume. With an increased surface area in combination with the reduced distance between two solid regions (separated by powder 4), the effective thermal insulation of the powder can be reduced. An equivalently massive gyroid lattice with ***t*** = 90 µm is around 40 % more thermally conductive than conventional hatched gyroid lattices with ***t*** = 500 µm, for instance.

Proper cell sizes for the smallest available ***t*** = 90 µm are in the range of 0.2 mm ≤ ***l*** ≤ 1 mm, while hatched solids with a variable ***t*** are typically of the size ***l*** ≈ 5 mm. Therefore, ***l*** is at least five times and at maximum 25 times lager. The size-effect manifests for any reduction of ***l*** but gets stronger for smaller ***l***. As a result, this method delivers optimized gyroid support structures that only contain the required amount of material, enable time-efficient scan strategies and in addition make use of the size-effect that increases the thermal conductivity in general but especially for highly dense lattices.

The vane component 2 as indicated in Figure 6 is manufactured with a gyroid support structure 1 of variable lattice density.

By utilizing the novel optimization method, the printing time can however be significantly reduced due to single-scan strategies while increasing the mechanical properties with the size-effect and maintaining the required material consumption (such a component is currently not explicitly indicated).

By adjusting the lattice volume fraction with the lattice cell size within a TO routine, maintaining a constant wall thickness to utilize single-scan strategies and finally make use of the size-effect, this support structure optimization method delivers lightweight and mass-efficient geometries that are scanned faster than the conventional pendant.

The component 2 as referred to herein may particularly relate to a part or an article of complex shape, such as with filigree structural features. Preferably, said component is made of a high-performance material, such as a material of great strength and/or thermal resistivity. Particularly, said part may constitute a part of a steam or gas turbine component, such as a blade, vane, as indicated in Figure 6. Alternatively, the component 2 may be a shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

The present solution overcomes the limitation of the previous support structure designing available on the market and optimizes heat conductivity and manufacturing complexity.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. A method of designing a support structure (1) for powder bed fusion additive manufacturing, the support structure (1) comprising a triply periodic minimal surface (TPMS),
- wherein the method makes use of a lattice optimization algorithm (LO), with a lattice cell size (l) as an optimization variable,
- wherein an absolute lattice feature size (t) is chosen as a design constant, and a relative lattice feature size (t') is taken as a model function depending on a lattice volume fraction (*ξ*), the method further comprising
- adjusting the lattice volume fraction (*ξ*) within the optimization routine.

2. The method according to claim 1, wherein the support structure (1) comprises a gyroid structure.

3. The method according to claim 1 or 2, wherein the lattice feature size (t) is a wall thickness of the support structure (1).

4. The method according to claim 3, wherein the wall thickness (t) is chosen small enough to qualify for a single-scan irradiation during the powder bed fusion process.

5. The method according to one of the previous claims, being a computer-aided engineering (CAE) method, wherein the optimization routine is or is part of a density-based topology optimization (TO) of the support structure (1).

6. The method according to one of the previous claims, wherein the optimization routine computes an ideal lattice cell size field (l(x)) being thereby constrained by thermal and mechanical boundary conditions for the powder bed fusion (LPBF) process.

7. The method according one of the previous claims, wherein the lattice volume fraction (*ξ*) is adjusted between 0.2 ≤ *ξ* ≤ 0.8.

8. The method according one of the previous claims, wherein the lattice cell size (l) is optimized in the range of 0.2 mm ≤ ***l***_{LUC} ≤ 1 mm.

9. A method of additively manufacturing a support structure (1) as designed by the method of one of the previous claims, via a powder bed fusion process, wherein the triply periodic minimal surface structure is established by a single-scan irradiation.

10. A support structure (1) manufactured by the method of claim 9 comprising a triply periodic minimal surface (TPMS), particularly a gyroid structure, wherein a wall thickness (t) of the triply periodic minimal surface structure is less than 100 µm.

11. Computer program (NC) comprising instructions which, when the program (NC) is executed by a data processing device (5), cause the device to carry out the steps of the method of one of claims 1 to 9.

12. Computer-readable storage medium having stored there on the computer program (5) of claim 11.
